# EUROPEAN PATENT APPLICATION

(11) **EP 2 716 502 A1**
(43) Date of publication of application: **09.04.2014**
(21) Application number: 11866118.0
(22) Date of filing: 25.05.2011
(51) Int. Cl.: B60R 16/023

(54) **VEHICLE COMMUNICATION APPARATUS**

(71) Applicant: Toyota Jidosha Kabushiki Kaisha, Toyota-shi, Aichi 471-8571 (JP); DENSO CORPORATION, Kariya-shi, Aichi 4488661 (JP)
(72) Inventor: ICHIHARA Masaaki, Toyota-shi Aichi 471-8571 (JP); SATO Jiro, Kariya-shi Aichi 448-8661 (JP)
(74) Representative: Winter, Brandl, Fürniss, Hübner, Röss, Kaiser, Polte - Partnerschaft
(86) International application number: PCT/JP2011/061969
(87) International publication number: WO 2012/160668

(57) **Abstract**

An information transfer ECU (110a) provided to a vehicle (100) acquires and accumulates vehicle information output from a plurality of vehicle ECUs (110) connected to a CAN communication line (120). Then, the information transfer ECU (110a) transfers the accumulated vehicle information to a portable information terminal (300) to/from which short-range radio communications have been established by a short-range communication control unit (150). The portable information terminal (300) transmits the transferred vehicle information to a vehicle information center (200) through an external communication line network (400) in order. When acquiring information for identifying the vehicle information whose transmission has been completed from the vehicle information center (200), the portable information terminal (300) supplies the information to the information transfer ECU (110a). The information transfer ECU (110a) erases the vehicle information whose transmission has been completed based on the acquired information.

## Description

### Technical Field

The present invention relates to a vehicle communication apparatus that enables communications between a vehicle and an external portion by use of a communication terminal independent of the vehicle.

### Background Art

Up to now, there is known a vehicle information collection system as disclosed in, for example, Patent Literature 1 listed below. The conventional vehicle information collection system is configured to transmit network information being transmitted on a vehicular network to a communication terminal with an image recording apparatus through a network interface, a vehicle-side communication I/F, and a terminal-side communication I/F connected in a non-contact wireless manner, and use the communication terminal to transmit the information to an external server. This allows a reduction in cost required when the system is mounted to a vehicle.

Further, up to now, there is known an on-vehicle information processing device as disclosed in, for example, Patent Literature 2 listed below. The conventional on-vehicle information processing device includes a Bluetooth (trademark) module, and is configured to exchange information through radio communications with for example, a mobile phone, a microphone unit, a portable audio player, a laptop computer, and a personal information device that serve as various electronic devices having a Bluetooth (trademark) function within a vehicle. This allows interconnection with a plurality of electronic devices within a vehicle through the short-range radio communications and allows information transmission with the various electronic devices with ease.

Further, up to now, there is known a vehicle wireless data communication system as disclosed in, for example, Patent Literature 3 listed below. The conventional vehicle wireless data communication system includes: a portable device including wireless data communication means and storage means for storing a code for setting up a network; and an in-vehicle device including wireless data communication means and storage means for storing a code for setting up the network corresponding to the above-mentioned code for setting up the network, and is configured to, when the portable device approaches a position within a communicable range of the in-vehicle device, compare the codes for setting up the network with each other for verification through an inquiry communication and, when the codes match each other, establish a wireless link, to bring the in-vehicle device to an active status. This can simplify an operation performed in mutual data communications between the portable device and the in-vehicle device.

Further, up to now, there is known a vehicle control system as disclosed in, for example, Patent Literature 4 listed below. The conventional vehicle control system includes an authentication ECU for transferring a command transmitted from a portable machine to an in-vehicle LAN, and is configured to, when the authentication ECU verifies that a user is an authorized one by subjecting a first identification code added to the command transferred from the portable machine to a comparison for verification, set a prestored second identification code as a specific code and send out a command to which an encrypted code obtained by encrypting the specific code is added. Then, a gateway ECU for mediating communications on the in-vehicle LAN subjects the specific code to a comparison for verification, and only when it is verified that the command is from an authorized device (user), transfers the command. This prevents an illegal device from being connected to the in-vehicle LAN.

Further, up to now, there is known a vehicle diagnostic system as disclosed in, for example, Patent Literature 5 listed below. The conventional vehicle diagnostic system has a function of checking whether or not communications between radio communication means already existing in a vehicle included in an in-vehicle information apparatus, a vehicle antitheft system, a keyless engine starting system, or the like and an electronic control unit are being performed normally or whether or not the radio communication means is in a normal state. With this function, without newly adding radio communication means or a communication line for connecting the electronic control unit to the radio communication means, it is possible to send out diagnostic information on the vehicle to an external portion of the vehicle at a low price.

In addition, up to now, there is known an in-vehicle terminal device as disclosed in, for example, Patent Literature 6 listed below. The conventional in-vehicle terminal device is configured so that a system of a center transmits electronic mail thereto when confirming existence of the in-vehicle terminal device based on a theft report received from the user or acquiring a signal for notifying that power has been turned on. When receiving the electronic mail while carrying out an intermittent operation, the in-vehicle terminal device examines contents thereof, and starts processing for transmitting information corresponding thereto. With this configuration, without periodically establishing a channel between the in-vehicle terminal device and the center, when there is an inquiry about information, the in-vehicle terminal device acknowledges reception thereof.

### Citation List

### Patent Literature

[PTL 1] JP 2006-160126 A
[PTL 2] JP 2001-239897 A
[PTL 3] JP 2001-218262 A
[PTL 4] JP 2005-343430 A
[PTL 5] JP 2002-257690 A
[PTL 6] JP 2003-341481 A

### Summary of Invention

### Technical Problem

Incidentally, in the above-mentioned conventional devices and systems, when information is transmitted to an external portion, the information can be transmitted to the external portion only in a situation in which short-range radio communications are established between a device mounted to a vehicle and a communication terminal having a communication function independent of the vehicle. However, in a case of transmitting information having a large information amount to the external portion, it is necessary to establish the short-range radio communications for a long period, but there is a fear in that the established communications may be forcedly interrupted during transmission because, for example, the communication terminal is carried out of a vehicle by a user. Such a failure to establish communications may cause a situation in which the information cannot appropriately be transmitted to the external portion.

The present invention has been made in order to solve the above-mentioned problem, and an object thereof is to provide a vehicle communication apparatus capable of communicating to/from an external portion by use of a communication terminal irrespective of whether or not communications between a vehicle and the communication terminal independent thereof have been established.

### Solution to Problem

In order to attain the above-mentioned object, according to a feature of the present invention, there is provided a vehicle communication apparatus for communicating to/from an external portion through a communication terminal independent of a vehicle by performing short-range radio communications to/from the communication terminal by using short-range radio communication means, the vehicle communication apparatus including: vehicle information storage means for storing vehicle information acquired in accordance with travel of the vehicle in order in an updatable manner; and information transfer means for transferring the vehicle information stored in the vehicle information storage means in order in the updatable manner to the communication terminal, in which: the communication terminal stores information for identifying the vehicle information whose transmission to the external portion has been completed through communications to/from the external portion among the vehicle information transferred by the information transfer means; and the information transfer means transfers, when transferring the vehicle information from a next time on, the vehicle information stored in the vehicle information storage means next to the vehicle information whose transmission to the external portion has been completed and thereafter to the communication terminal based on the information for identifying the vehicle information whose transmission to the external portion has been completed which is stored by the communication terminal.

In this case, the vehicle information storage means may erase the vehicle information stored before the vehicle information whose transmission to the external portion has been completed based on the information for identifying the vehicle information whose transmission to the external portion has been completed which is stored by the communication terminal.

Further, in those cases, when there exists another short-range radio communication means for performing short-range radio communications to/from the vehicle, the short-range radio communication means for performing the short-range radio communications between the vehicle and the communication terminal may establish the short-range radio communications between the vehicle and the communication terminal after lapse of a predetermined time period after the vehicle information is stored in the vehicle information storage means.

According to those cases, even in a situation in which a priority of use of the short-range radio communications established between the vehicle and the communication terminal is low and communications between the vehicle and the external portion are uncertain, it is possible to effectively prevent useless information such as the vehicle information that has already been transmitted to the external portion (or vehicle information that has already been transferred to the communication terminal) from being transmitted from the vehicle to the external portion again. Accordingly, it is possible to satisfactorily reduce information to be transmitted from the vehicle to the external portion, and it is also possible to reduce communication expenses.

Further, the vehicle information that needs to be transmitted to the external portion is previously transferred to the communication terminal, to thereby enable an increase in opportunity to transmit the vehicle information to the external portion. For example, even in a situation in which a communication environment using the communication terminal has become worse when the vehicle information is transmitted from an inside of the vehicle to the external portion, by previously transferring the vehicle information to the communication terminal, it is possible to positively transmit the vehicle information to the external portion when the communication environment is recovered by leaving the vehicle.

Further, after the communication terminal transmits the transferred vehicle information to the external portion (or after the vehicle information is transferred to the communication terminal), the vehicle information that has been successfully transmitted (or transferred) can be erased. Accordingly, it is possible to reduce a capacity of a memory provided to the vehicle, with the result that manufacturing cost can be reduced.

In addition, the short-range radio communications can be established between the vehicle and the communication terminal after the lapse of the predetermined time period. Accordingly, it is possible to positively transfer the vehicle information to the communication terminal after positively finishing a situation in which, for example, an application or the like for realizing a hands-free voice communication function or an entertainment operation function preferentially uses the short-range radio communications.

Further, according to another feature of the present invention, there is provided a vehicle communication apparatus for communicating to/from an external portion through a communication terminal independent of a vehicle by performing short-range radio communications to/from the communication terminal by using short-range radio communication means, the vehicle communication apparatus including: vehicle information storage means for storing vehicle information acquired in accordance with travel of the vehicle in order in an updatable manner; vehicle information discrimination means for discriminating the vehicle information stored in the vehicle information storage means between the vehicle information to be used by the external portion and the vehicle information to be used by the communication terminal; encryption processing means for encrypting respective pieces of vehicle information obtained by the vehicle information discrimination means through discrimination in different encrypted states; and information transfer means for transferring the respective pieces of vehicle information encrypted by the encryption processing means in the different encrypted states to the communication terminal, in which the communication terminal decodes only the vehicle information to be used by the communication terminal of the respective pieces of vehicle information encrypted in the different encrypted states and transferred by the information transfer means, and transmits the vehicle information to be used by the external portion as it is in the encrypted state.

In this case, for example, the encryption processing means may be configured to: encrypt the vehicle information to be used by the communication terminal by using a first encryption key; and encrypt the vehicle information to be used by the external portion by using a second encryption key different from the first encryption key.

In this case, more specifically, the first encryption key used by the communication terminal in order to decode the vehicle information encrypted by using the first encryption key may be transmitted from the external portion, for example. Further, the first encryption key used by the communication terminal in order to decode the vehicle information encrypted by using the first encryption key may be included in an application provided by the external portion and used by the communication terminal, for example.

According to those cases, the vehicle information to be used by the communication terminal is encrypted by the first encryption key, while the vehicle information to be used by the external portion is at least encrypted by the second encryption key different from the first encryption key, and the vehicle information to be used by the communication terminal and the vehicle information to be used by the external portion can be encrypted in the different encrypted states. Accordingly, the communication terminal can use the vehicle information to be used by the communication terminal by decoding the vehicle information by using the first encryption key, and can also transmit the vehicle information to be used by the external portion, which has been encrypted by using the second encryption key, to the external portion as it is.

Accordingly, for example, even when an illegal application is installed on the communication terminal and if the vehicle information to be used by the external portion is transmitted to another external portion, it is possible to effectively prevent the illegally-transmitted vehicle information from being decrypted. That is, by encrypting the vehicle information in the different encrypted states, the less secret vehicle information to be used by the communication terminal and the more secret vehicle information to be used only by a specific external portion can each be protected appropriately for communications thereof.

Further, according to still another feature of the present invention, there is provided a vehicle communication apparatus for communicating to/from an external portion through a communication terminal independent of a vehicle by performing short-range radio communications to/from the communication terminal by using short-range radio communication means, the vehicle including: a dedicated communication terminal mounted to the vehicle, for communicating to/from the external portion and the communication terminal through the external portion; and vehicle control means for acquiring instruction information for controlling the vehicle from at least one of the communication terminal and the dedicated communication terminal, and controlling the vehicle in accordance with the instruction information, the vehicle communication apparatus including: vehicle information storage means for storing vehicle information acquired in accordance with travel of the vehicle in order in an updatable manner; information transfer means for transferring the vehicle information stored in the vehicle information storage means in order in the updatable manner to the communication terminal and the dedicated communication terminal; direct communication means for allowing the vehicle and the communication terminal to directly communicate to/from each other through the short-range radio communications established by the short-range radio communication means; and indirect communication means for allowing the vehicle and the communication terminal to indirectly communicate to/from each other through the external portion by using the dedicated communication terminal, in which the vehicle control means acquires the instruction information from the direct communication means more preferentially than from the indirect communication means when the vehicle and the communication terminal are allowed to perform the short-range radio communications to/from each other by the short-range radio communication means.

In this case, the communication terminal may transmit the instruction information by adding time information thereto when transmitting the instruction information to the vehicle by at least one of the direct communication means and the indirect communication means, and the vehicle control means may control the vehicle in accordance with the instruction information that is new in terms of a time indicated by the time information based on the time information received along with the instruction information.

Further, in those cases, the vehicle may include a battery that is rechargeable by an external charger, and the vehicle control means may control charging of the battery in accordance with the instruction information.

According to those cases, when the short-range radio communications are established, the vehicle control means can preferentially acquire the instruction information directly from the communication terminal. Therefore, the control can be executed more quickly than in a situation in which the instruction information is temporarily transmitted from the communication terminal to the external portion and the instruction information transmitted from the external portion is acquired through the dedicated communication terminal, in other words, the vehicle control means acquires the instruction information indirectly.

Further, the time information can be added to the instruction information, and hence, even in a situation in which, for example, the vehicle control means acquires two pieces of instruction information directly and indirectly, respectively, the control can be executed based on any one of the pieces of instruction information. Accordingly, it is possible to positively execute the necessary control.

### Brief Description of Drawings

FIG. 1 is a schematic diagram of an information communication system for a vehicle including a vehicle communication apparatus according to an embodiment of the present invention.
FIG. 2 is a flowchart of a vehicle information transfer program executed by an information transfer ECU illustrated in FIG. 1 according to a first embodiment the present invention.
FIG. 3 is a flowchart of an encryption processing program executed by the information transfer ECU illustrated in FIG. 1 according to a second embodiment of the present invention.

### Description of Embodiments

### a. First embodiment

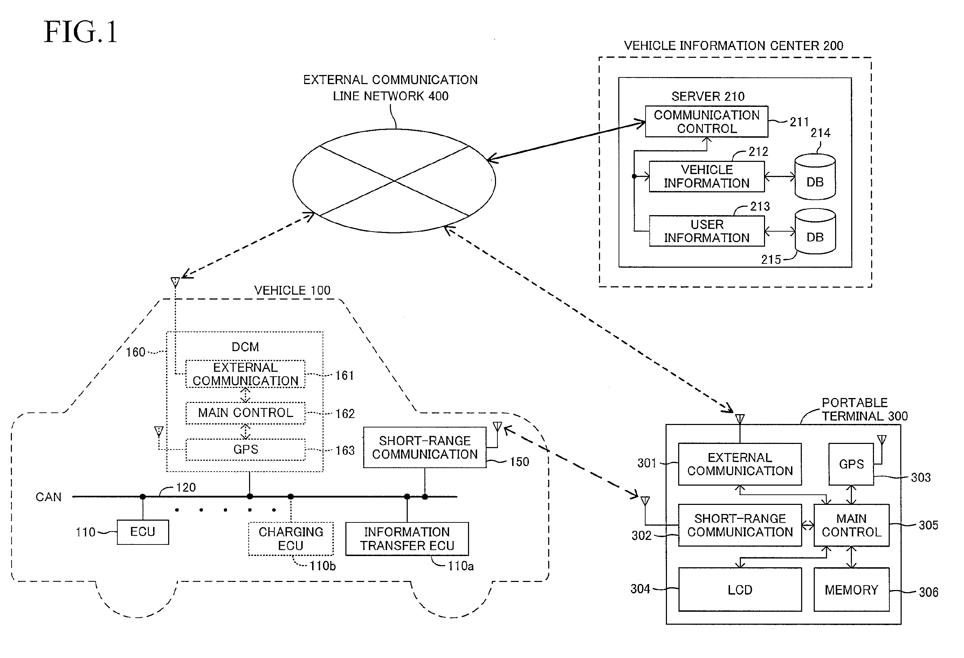

Now, a description is made of a vehicle communication apparatus according to embodiments of the present invention with reference to the accompanying drawings. FIG. 1 is a schematic block diagram schematically illustrating an information communication system for a vehicle including a vehicle communication apparatus according to a first embodiment, which is common to the respective embodiments.

First, the information communication system for a vehicle is described. The information communication system for a vehicle can provide a user with various kinds of information and services by including: a vehicle 100; a vehicle information center 200; and a portable information terminal 300 owned by the user of the vehicle 100 as a communication terminal independent of the vehicle 100, which are connected to one another through an external communication line network 400 (for example, Internet network or dedicated line network) with components thereof working in coordination.

The vehicle 100 is provided with a plurality of electronic control units 110 (hereinafter referred to as "vehicle ECUs 100") for controlling a state of the vehicle. The respective vehicle ECUs 110 are connected to a CAN communication line 120 of a controller area network (CAN) communication system, and can input/output various signals to one another via the CAN communication line 120. Further, the vehicle ECUs 110 each include a microcomputer formed of a CPU, a ROM, and a RAM as a main component part, and further includes a memory, an input/output interface, and a drive circuit for driving various actuators by receiving an input of a sensor signal. Further, the CAN communication line 120 is connected to a short-range communication control unit 150 serving as a communication I/F for realizing short range communications to/from the portable information terminal 300. Here, this embodiment is carried out by employing Bluetooth (trademark) as a communication mode for the short-range communication control unit 150, but it should be understood that this embodiment can be carried out by employing another short-range radio communication mode such as Wi-Fi (trademark) as another communication mode.

Here, it is preferred that an electric vehicle using battery power to drive a drive motor or a plug-in hybrid vehicle including a drive motor and an internal combustion engine which allows a battery to be charged by a charger be employed as the vehicle 100 applied to the information communication system. However, a conventional vehicle that travels by using an internal combustion engine without including a drive motor may be employed, and there is no limitation to a drive format.

The vehicle information center 200 is a facility that acquires various kinds of vehicle information from the vehicle 100 and provides the user of the vehicle 100 with different kinds of service information. The vehicle information center 200 is provided with a server 210 including a microcomputer as a main component part. The server 210 includes: a communication control unit 211 connected to the external communication line network 400, for controlling communications; a vehicle information server 212 for managing vehicle information; a user information server 213 for managing user information on the vehicle; a vehicle information storage unit 214 for storing a database of the vehicle information; and a user information storage unit 215 for storing a database of the user information. The server 210 stores relation information for associating an ID (information corresponding to registration number or vehicle identification number) for identifying the vehicle 100 and an ID (user name, telephone number of the portable information terminal 300, email address thereof, or the like) for identifying the user with each other, and is configured so that, by identifying any one of the IDs, the information identified by the other ID can be extracted.

The portable information terminal 300 owned by the user includes: an external communication control section 301 being a communication I/F for connecting to the external communication line network 400; a short-range communication control section 302 being a communication I/F for realizing short-range radio communications using Bluetooth (trademark); a GPS unit 303 for detecting current location coordinates of the portable information terminal 300 based on a radio wave received from a GPS satellite; a touch-panel liquid crystal display 304 serving as an indicator and a control console; a main control section 305 for executing communication control and various applications by using a microcomputer as a main component part; and a nonvolatile memory 306 for storing various kinds of data such as an application program. Here, for example, a mobile phone such as a smartphone can be employed as the portable information terminal 300.

Next, a description is made of the vehicle communication apparatus applied to the information communication system for a vehicle having the above-mentioned configuration. The vehicle communication apparatus according to this embodiment is realized by the vehicle 100 and the portable information terminal 300 performing the short-range radio communications and by the portable information terminal 300 and the vehicle information center 200 performing communications through the external communication line network 400. Specifically, an information transfer ECU 110a on a vehicle 100 side acquires various kinds of information output from the plurality of vehicle ECUs 110 provided to the vehicle 100 and stores the acquired various kinds of information in a predetermined storage location within a nonvolatile memory in order so as to allow a search therefor. Then, the information transfer ECU 110a transfers the stored various kinds of information to the portable information terminal 300.

On the portable information terminal 300, the various kinds of information transferred from the information transfer ECU 110a on the vehicle 100 side are acquired and temporarily stored. Then, the portable information terminal 300 transmits the temporarily-stored various kinds of information when the communications can be performed to/from the vehicle information center 200 through the external communication line network 400.

In order to realize such a vehicle communication apparatus, the user of the vehicle 100 previously sets pairing processing between the vehicle 100 and the portable information terminal 300. Note that, the pairing processing for performing communications by using Bluetooth (trademark) does not directly relate to the present invention, and is therefore described briefly below. In general, when a Bluetooth (trademark) device is used for the first time, it is necessary to perform processing (operation) called pairing for identifying a counterpart being a connection destination. In this case, the user of the vehicle 100 operates, for example, the short-range communication control unit 150 of the vehicle 100 to set the short-range communication control unit 150 to a searchable state for searching for the portable information terminal 300 being a counterpart device. Meanwhile, on the portable information terminal 300, the user of the vehicle 100 also sets the short-range communication control section 302 to a searchable state through the main control section 305. Note that, before setting such a searchable state, authentication and encryption are commonly set for each thereof.

By thus setting each thereof to a searchable state, Bluetooth (trademark) devices existing around, that is, the vehicle 100 and the portable information terminal 300, are displayed on, for example, a display (not shown) provided to the vehicle 100 by being connected to the CAN communication line 120 and the touch-panel liquid crystal display 304 of the portable information terminal 300, and the vehicle 100 and the portable information terminal 300 therefore each designate the connection destination. Then, after the vehicle 100 and the portable information terminal 300 are thus selected as the connection destinations, the same passkey (authentication key (PIN)) is input to each thereof, and the input passkeys are exchanged with each other, to thereby complete the pairing processing.

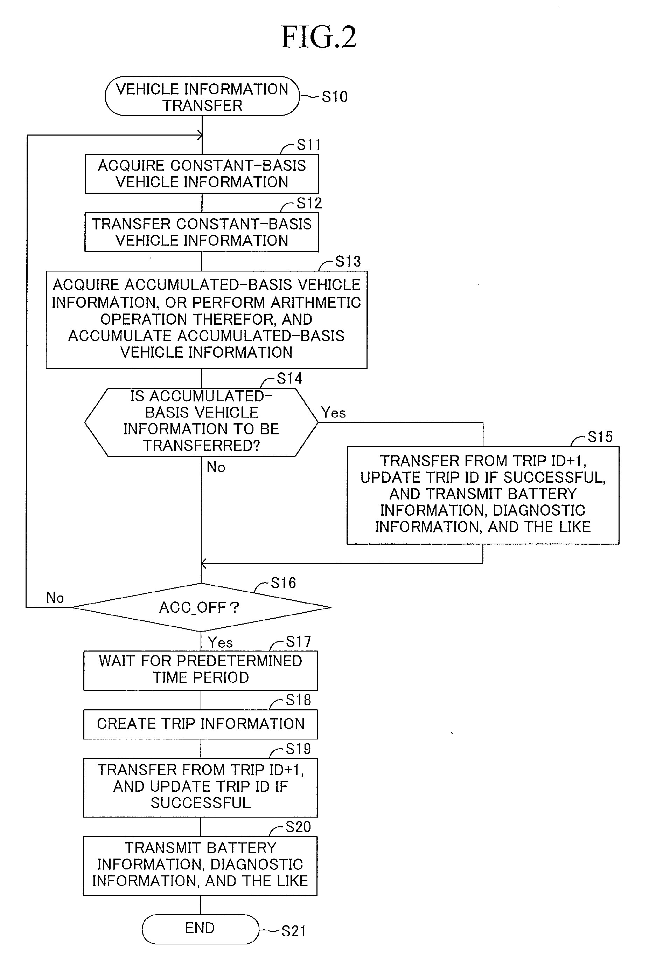

In a state in which the pairing processing for using Bluetooth (trademark) communications between the vehicle 100 and the portable information terminal 300 has been thus completed, when a driver gets on the vehicle 100 while holding the portable information terminal 300 and operates an ignition switch (not shown) to an accessory-on operation position, a connection is automatically established. Note that, when the connection (pairing) is thus automatically established, for example, a lamp provided inside a meter cluster is turned on to inform the driver that the connection has been established. When the ignition switch (not shown) is operated to the accessory-on operation position by the driver, the information transfer ECU 110a starts execution of a vehicle information transfer program illustrated in FIG. 2 in Step S10.

Subsequently, the information transfer ECU 110a acquires constant-basis vehicle information in Step S11 of the vehicle information transfer program. That is, the information transfer ECU 110a acquires, from the corresponding vehicle ECU 110 through the CAN communication line 120 as the constant-basis vehicle information, the vehicle information set to be necessarily transferred to the vehicle information center 200 at all times (or in real time), specifically, the fuel consumption/power consumption information such as instantaneous fuel consumption and total fuel consumption of the plug-in hybrid vehicle or a conventional automobile or instantaneous power consumption and total power consumption of the electric vehicle or the plug-in hybrid vehicle, and, device actuation information such as a vehicle speed (speed) of the vehicle 100 and an rpm of the internal combustion engine. After the information transfer ECU 110a acquires the constant-basis vehicle information, the vehicle information transfer program advances to Step S12.

In Step S12, the information transfer ECU 110a transfers the constant-basis vehicle information acquired in Step S11 described above to the portable information terminal 300. That is, the information transfer ECU 110a outputs the acquired constant-basis vehicle information to the short-range communication control unit 150 connected to the CAN communication line 120. The short-range communication control unit 150 performs the short-range radio communications using Bluetooth (trademark) to/from the portable information terminal 300 automatically paired therewith in advance, and transfers the output constant-basis vehicle information to the portable information terminal 300. After the information transfer ECU 110a thus transfers the constant-basis vehicle information to the portable information terminal 300, the vehicle information transfer program advances to Step S13.

Here, on the portable information terminal 300, the main control section 305 temporarily stores the thus-transferred constant-basis vehicle information in, for example, the predetermined storage location within the nonvolatile memory 306. Then, by execution of a predetermined application program previously started up by the user or automatically started up by the main control section 305, the main control section 305 transmits the constant-basis vehicle information temporarily stored in the predetermined storage location within the nonvolatile memory 306 to the vehicle information center 200. Specifically, the main control section 305 supplies the constant-basis vehicle information temporarily stored by the execution of the predetermined application program to the external communication control section 301. The external communication control section 301 establishes a connection to the communication control unit 211 of the vehicle information center 200 through the external communication line network 400, and transmits the supplied constant-basis vehicle information to the vehicle information center 200.

Incidentally, in a case of using Bluetooth (trademark) to transmit/receive information, serial communications between two devices using a serial port profile (SPP) are performed. Then, by using the SPP, it is possible to cause a display and a speaker provided to the vehicle 100 to output so-called hands-free voice communications using the portable information terminal 300, music information stored in the portable information terminal 300, search results obtained by the application program, and the like. Accordingly, when such hands-free voice communications and entertainment operations are performed, the SPP is occupied by those voice communications and operations, which may cause a situation in which the above-mentioned transmission of the constant-basis vehicle information from the information transfer ECU 110a to the portable information terminal 300 cannot be executed. In this case, for example, the information transfer ECU 110a can wait for the transmission of the constant-basis vehicle information until the SPP becomes available (so-called until the SPP is opened), or can transmit the constant-basis vehicle information by forcedly using the SPP temporarily.

In Step S13, the information transfer ECU 110a acquires accumulated-basis vehicle information, or performs arithmetic operation therefor, to accumulate the accumulated-basis vehicle information. That is, the information transfer ECU 110a acquires the vehicle information set to be transferred to the vehicle information center 200 with a lower frequency, specifically, driving information obtained during a period until the operation position of the ignition switch is operated from the accessory-on operation position to an accessory-off operation position (the period being hereinafter referred to as "trip") (the driving information during the trip being hereinafter referred to as "trip information").

That is, for example, the information transfer ECU 110a acquires a travel time, a total traveling distance, and the like from the corresponding vehicle ECU 110, uses the acquired information to calculate the fuel consumption/power consumption information, an EV travel distance and an HV travel distance of the plug-in hybrid vehicle, or the like, and accumulates and stores the calculated information as the trip information in the predetermined storage location within the nonvolatile memory. Note that, the trip information is stored in association with a trip ID given as a serial number for identifying the trip information. Further, the information transfer ECU 110a acquires from the corresponding vehicle ECU 110, for example, battery information indicating a state-of-charge (SOC), a deterioration state, a maximum voltage, and the like of the battery mounted to the vehicle 100, diagnostic information (failure information), and the like, and accumulates and stores the acquired battery information, the diagnostic information, the like as well in the predetermined storage location within the nonvolatile memory. Then, after the trip information (including trip ID), the battery information, the diagnostic information, and the like are accumulated and stored, the vehicle information transfer program advances to Step S14.

In Step S14, the information transfer ECU 110a determines whether or not to transfer the accumulated-basis vehicle information. Specifically, if the SPP for Bluetooth (trademark) is opened at a predefined timing to transmit the accumulated-basis vehicle information, the information transfer ECU 110a determines "Yes" because the accumulated-basis vehicle information can be transferred, and the vehicle information transfer program advances to Step S15. On the other hand, in Step S14, if the SPP for Bluetooth (trademark) is not opened, the information transfer ECU 110a determines "No" because the accumulated-basis/vehicle information cannot be transferred, and the vehicle information transfer program advances to Step S16.

In Step S15, the current state enables the transfer, and hence the information transfer ECU 110a transfers, in terms of the trip ID corresponding to the trip information transferred by previous transfer processing for the accumulated-basis vehicle information, pieces of trip information of the trip ID+1 and the subsequent ones stored and accumulated next to the already-transferred trip information and thereafter in order to the portable information terminal 300. When the trip information has been transferred successfully, the information transfer ECU 110a updates the trip ID corresponding to the successful trip information, and stores the updated trip ID in the predetermined storage location within the nonvolatile memory. In addition to the transfer of the trip information, the information transfer ECU 110a transfers, for example, the battery information and the diagnostic information that have a lower transfer frequency to the portable information terminal 300.

On the portable information terminal 300, the main control section 305 temporarily stores the transferred accumulated-basis vehicle information in, for example, the predetermined storage location within the nonvolatile memory 306. Then, by execution of the predetermined application program, the main control section 305 transmits the accumulated-basis vehicle information temporarily stored in the predetermined storage location within the nonvolatile memory 306 to the vehicle information center 200 through the external communication control section 301, the external communication line network 400, and the communication control unit 211.

In Step S16, the information transfer ECU 110a determines whether or not the ignition switch has been operated to the accessory-off operation position by the user. That is, the information transfer ECU 110a determines "Yes" when the operation position of the ignition switch has been operated to the accessory-off operation position, and the vehicle information transfer program advances to Step S17. Here, when the operation position of the ignition switch is operated to the accessory-off operation position, the connection for executing a hands-free voice communication function, an entertainment operation function, and the like is disconnected, and the SPP is opened. On the other hand, if the operation position of the ignition switch has not been operated to the accessory-off operation position, in other words, if a state in which the operation position of the ignition switch has been operated to the accessory-on operation position is maintained, the information transfer ECU 110a determines "No", and the vehicle information transfer program returns to Step S11 to repeatedly execute the respective processing steps of Step S11 and the subsequent steps.

In Step S17, the information transfer ECU 110a waits until a predetermined time period (for example, approximately 5 seconds), which elapses after the operation position of the ignition switch is operated to the accessory-off operation position until the processing for storing the accumulated-basis vehicle information is completed and until the connection for executing the hands-free voice communication function, the entertainment operation function, and the like is positively disconnected, has elapsed. By thus waiting until the predetermined time period has elapsed, the above-mentioned hands-free voice communication function is positively canceled, and the application for realizing the entertainment operation function is positively finished. Further, by waiting until the predetermined time period has elapsed, the current trip of the vehicle 100 is finalized, and the processing for storing the vehicle information on the finalized trip is completed. Then, after the information transfer ECU 110a waits until the predetermined time period has elapsed, the vehicle information transfer program advances to Step S18.

In Step S18, the information transfer ECU 110a creates the current trip information because the current trip of the vehicle 100 is finalized by executing the waiting processing in Step S17 described above. That is, the information transfer ECU 110a creates the trip information formed of the travel time, the total traveling distance, the fuel consumption/power consumption information, the EV travel distance and the HV travel distance of the plug-in hybrid vehicle, and the like. Then, after the information transfer ECU 110a creates the trip information involved in the current travel of the vehicle 100, the vehicle information transfer program advances to Step S 19.

In Step S19, the information transfer ECU 110a transfers, in terms of the trip ID indicating the trip information transferred in the transfer processing for the previous accumulated-basis vehicle information or the trip ID indicating the trip information transferred in the transfer processing for the accumulated-basis vehicle information in Step S15 described above, the pieces of trip information of the trip ID+1 and the subsequent ones stored and accumulated next to the already-transferred trip information and thereafter in order to the portable information terminal 300. When the trip information has been transferred successfully, the information transfer ECU 110a updates the trip ID corresponding to the successful trip information, and stores the updated trip ID in the predetermined storage location within the nonvolatile memory. After the information transfer ECU 110a transfers the trip information in order to the portable information terminal 300 and updates the trip ID corresponding to the transferred trip information, the vehicle information transfer program advances to Step S20.

Here, on the portable information terminal 300 to which the trip information has been transferred, for example, after the user gets off the vehicle 100, the external communication control section 301 communicates to/from the vehicle information center 200 through the external communication line network 400, and if a plurality of pieces of trip information have been transferred from the information transfer ECU 110a as described above, the main control section 305 transmits the plurality of pieces of trip information in order along with the corresponding trip ID. When receiving, for example, the information indicating the trip ID corresponding to the trip information successfully received by the server 210 (the information being hereinafter referred to as "transmission-completed trip ID information") among the transmitted pieces of trip information from the server 210 of the vehicle information center 200 (specifically, vehicle information server 212), the main control section 305 stores the transmission-completed trip ID information in the predetermined storage location within the nonvolatile memory 306.

In this manner, when the portable information terminal 300 storing the transmission-completed trip ID information in the nonvolatile memory 306, for example, is carried into the vehicle 100 at the subsequent travel time and completes the pairing with the vehicle 100, the transmission-completed trip ID information is supplied to the information transfer ECU 110a. Therefore, the information transfer ECU 110a erases, for example, the pieces of trip information corresponding to the trip IDs preceding the one that matches the trip ID indicated by the transmission-completed trip ID information (that is, trip ID-1, trip ID-2,..., and trip ID-n) among the plurality of pieces of trip information stored in the predetermined storage location within the nonvolatile memory managed by itself. In other words, the information transfer ECU 110a erases the trip information successfully transmitted to the vehicle information center 200 through the portable information terminal 300 from the nonvolatile memory.

Note that, the transfer processing of Step S19 can be carried out so as to transfer all the pieces of trip information that have not been transferred yet to the portable information terminal 300 at one time. In this case, the information transfer ECU 110a can acquire the transmission-completed trip ID information being the information for identifying the trip information successfully transmitted from the portable information terminal 300 to the vehicle information center 200, and update the trip ID corresponding to the transferred trip information based on the acquired information. Then, the information transfer ECU 110a transfers the pieces of trip information of the trip ID+1 and the subsequent ones in order to the portable information terminal 300 from the next time on based on the updated trip ID, and erases the pieces of trip information corresponding to the preceding trip IDs (that is, trip ID-1, trip ID-2,..., and trip ID-n).

In Step S20, in addition to the transfer of the trip information in Step S19 described above, the information transfer ECU 110a transfers the battery information, the diagnostic information (failure information), and the like that have a lower transfer frequency to the portable information terminal 300. Therefore, the portable information terminal 300 can transmit the battery information, the diagnostic information (failure information), and the like to the vehicle information center 200. Then, after the information transfer ECU 110a transfers the battery information, the diagnostic information (failure information), and the like to the portable information terminal 300, the vehicle information transfer program advances to Step S21.

In Step S21, the information transfer ECU 110a turns off the power to the vehicle 100, and finishes the execution of the vehicle information transfer program in Step S22.

As can be understood from the above description, according to the first embodiment, even in a situation in which a priority of use of the short-range radio communications established between the vehicle 100 and the portable information terminal 300 is low and communications to/from the vehicle information center 200 are uncertain, it is possible to effectively prevent useless information such as the vehicle information that has already been transferred or transmitted (that is, trip information or the like) from being transferred or transmitted again (repeatedly). Accordingly, it is possible to satisfactorily reduce the information to be transmitted from the vehicle 100 to the vehicle information center 200, and it is also possible to reduce communication expenses.

Further, the vehicle information that needs to be transmitted to the vehicle information center 200 (that is, trip information or the like) is previously transferred to the portable information terminal 300, to thereby enable an increase in opportunity to transmit the vehicle information (that is, trip information or the like) to the vehicle information center 200. For example, even in a situation in which a communication environment using the external communication line network 400 has become worse when the vehicle information is transmitted from an inside of the vehicle 100 to the vehicle information center 200, by previously transferring the vehicle information (that is, trip information or the like) to the portable information terminal 300, it is possible to positively transmit the vehicle information (that is, trip information or the like) to the vehicle information center 200 when the communication environment is recovered by leaving the vehicle 100.

Further, after the vehicle information (that is, trip information or the like) is transferred to the portable information terminal 300 or after the portable information terminal 300 transmits the transferred vehicle information (that is, trip information or the like) to the vehicle information center 200, the information transfer ECU 110a can erase the vehicle information (that is, trip information or the like) that has been successfully transmitted (or transferred). Accordingly, it is possible to reduce a capacity of a memory provided to the information transfer ECU 110a, with the result that manufacturing cost can be reduced.

In addition, the information transfer ECU 110a can transfer the vehicle information (that is, trip information or the like) to the portable information terminal 300 after lapse of the predetermined time period. Accordingly, the information transfer ECU 110a can positively transfer the vehicle information (that is, trip information or the like) to the portable information terminal 300 by using the short-range radio communications after positively finishing a situation in which, for example, an application or the like for realizing the hands-free voice communication function or the entertainment operation function preferentially uses the short-range radio communications.

### b. Second embodiment

The above-mentioned first embodiment is carried out so that the information transfer ECU 110a of the vehicle 100 executes the vehicle information transfer program illustrated in FIG. 2, to thereby transfer the various kinds of information collected by the plurality of vehicle ECUs 110 to the portable information terminal 300, and the portable information terminal 300 transmits the transferred various kinds of information to the vehicle information center 200 through the external communication line network 400.

Incidentally, the portable information terminal 300 owned by the user realizes the communications between the vehicle 100 and the vehicle information center 200 in the information communication system, and also allows the user to perform voice communications in the same manner as a normal mobile phone and the various applications acquired through the Internet to be executed in the same manner as a normal personal computer. In particular, the portable information terminal 300 can acquire an application from an external portion to execute the application, and hence, for example, in an environment in which security is not sufficiently ensured, it is highly possible that an illegal (malicious) application may be acquired. In a case where such an application is erroneously acquired and executed, there is a possibility that different kinds of information included in the portable information terminal 300 may be illegally exploited and unintentionally transmitted, to thereby leak to the external portion.

Therefore, in the case of using the portable information terminal 300 within the information communication system to realize the communications between the vehicle 100 and the vehicle information center 200, that is, in the case where the information transfer ECU 110a executes the above-mentioned vehicle information transfer program, to thereby transfer the various kinds of information (for example, trip information) to the portable information terminal 300 and transmit the information to the vehicle information center 200, even if the various kinds of information relating to the vehicle 100 are illegally exploited and unintentionally transmitted and leak to the external portion, it is necessary to prevent the various kinds of information from being used with ease or having the contents examined with ease. A second embodiment is described below in detail, and the same components as those of the above-mentioned first embodiment are denoted by the same reference symbols, descriptions of which are omitted.

In the second embodiment, in the same manner as in the above-mentioned first embodiment, the information transfer ECU 110a executes the vehicle information transfer program illustrated in FIG. 2. However, in the second embodiment, when the various kinds of information (vehicle information) output to the CAN communication line 120 are collected from the plurality of vehicle ECUs 110, the information transfer ECU 110a discriminates (distinguishes) the collected various kinds of information between information to be transmitted to the vehicle information center 200 and information to be used by the portable information terminal 300.

Specifically, in the respective processing steps of Step S11, Step S13, and Step S18 that are described above within the above-mentioned vehicle information transfer program, the information transfer ECU 110a discriminates (distinguishes) the acquired various kinds of information (vehicle information) between the information to be transmitted to the vehicle information center 200 and the information to be used by the portable information terminal 300. Then, the information transfer ECU 110a subjects each of the pieces of information obtained by the discrimination (distinction) to different kinds of encryption processing, and transfers the pieces of information that have been subjected to the encryption processing to the portable information terminal 300 in the respective processing steps of Step S12, Step S14, and Step S19 that are described above within the above-mentioned vehicle information transfer program.

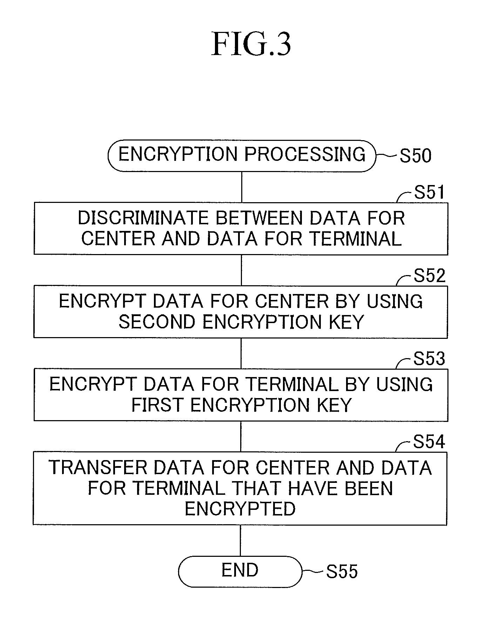

To give a detailed description thereof, when the various kinds of information (vehicle information) are acquired (collected) from the vehicle ECUs 110, the information transfer ECU 110a starts execution of an encryption processing program illustrated in FIG. 3 in Step S50. Then, subsequently in Step S51, the information transfer ECU 110a discriminates (distinguishes) the acquired (collected) various kinds of information (vehicle information) between the information to be transmitted to the vehicle information center 200 and the information to be used by the portable information terminal 300. Note that, examples of the information to be transmitted to the vehicle information center 200 may include information that can identify the user depending on analysis and information relating to know-how of an automaker, such as the device actuation information, the trip information, the battery information, and the diagnostic information (failure information) that are described above. Further, examples of the information to be used by the portable information terminal 300 may include information to be displayed on the touch-panel liquid crystal display 304 of the portable information terminal 300 and information that can be made public to others, such as the fuel consumption/power consumption information described above. Then, after the information transfer ECU 110a discriminates (distinguishing) the acquired (collected) various kinds of information (vehicle information) between the information to be transmitted to the vehicle information center 200 (hereinafter referred to as "data for center") and the information to be used by the portable information terminal 300 (referred to as "data for terminal"), the encryption processing program advances to Step S52.

In Step S52, the information transfer ECU 110a encrypts the data for center by using a second encryption key described later in detail. Then, after the information transfer ECU 110a encrypts the data for center by using the second encryption key, the encryption processing program advances to Step S53.

In Step S53, the information transfer ECU 110a encrypts the data for terminal by using a first encryption key. Then, after the information transfer ECU 110a encrypts the data for center by using the first encryption key, the encryption processing program advances to Step S54. Note that, in this case, the data for center encrypted by using the second encryption key in Step S52 described above may be further encrypted by using the first encryption key.

Here, the first encryption key for encrypting the data for terminal and the second encryption key for encrypting the data for center are stored in, for example, a predetermined storage location within the ROM of the information transfer ECU 110a in advance at a vehicle assembly plant. Further, those first encryption key and second encryption key are previously transmitted to the server 210 of the vehicle information center 200 by using, for example, a terminal apparatus at the vehicle assembly plant. Then, for example, in a case where there is access from the portable information terminal 300 through the external communication line network 400, the server 210 of the vehicle information center 200 transmits the first encryption key for decoding the data for terminal to the portable information terminal 300 after predetermined authentication processing. Therefore, the portable information terminal 300 stores the first encryption key transmitted thereto in the predetermined storage location within the nonvolatile memory 306.

Note that, in this case, when the portable information terminal 300 uses a predetermined decoding application to subject the information encrypted by the first encryption key to the decoding processing as described later, the first encryption key is previously transmitted from the terminal apparatus at the vehicle assembly plant to a providing center for distributing (providing) the predetermined decoding application. Then, the providing center distributes (provides) the predetermined decoding application in which the first encryption key is embedded to the portable information terminal 300. Further, the second embodiment is carried out by taking an exemplary case where the first encryption key and the second encryption key are used as so-called common keys, but it should be understand that the second embodiment can be carried out by employing a public key system. Further, three centers or more may include the vehicle information center 200, and a plurality of terminal apparatus may include the portable information terminal 300.

In Step S54, the information transfer ECU 110a transfers the data for center encrypted by using the second encryption key (in addition, first encryption key) and the data for terminal encrypted by using the first encryption key to the portable information terminal 300 in the same manner as, for example, the respective processing steps of Step S12, Step S14, and Step S19 that are described above within the above-mentioned vehicle information transfer program, and finishes the execution of the encryption processing program in Step S55.

In this manner, the data for center and the data for terminal that are encrypted by the execution of the encryption processing program are decoded by the portable information terminal 300 by using the first encryption key. That is, on the portable information terminal 300, the main control section 305 acquires the first encryption key transmitted from the server 210 of the vehicle information center 200 and stored in the predetermined storage location within the nonvolatile memory 306, or starts up the predetermined decoding application acquired from the providing center. Then, the main control section 305 uses the acquired first encryption key or uses the predetermined decoding application in which the first encryption key is embedded to perform the decoding processing for the data for terminal encrypted by using the first encryption key and the data for center encrypted by using the second encryption key and further encrypted by using the first encryption key.

Therefore, the encryption of the data for terminal is canceled, and the main control section 305 uses the data for terminal to display, for example, the information relating to the fuel consumption or power consumption of the vehicle 100 on the touch-panel liquid crystal display 304. On the other hand, the data for center is encrypted by the first encryption key and the second encryption key, and therefore maintains a state of being still encrypted by the second encryption key even after being decoded by using the first encryption key. Accordingly, without analyzing (using) the data for center encrypted by the second encryption key, the main control section 305 uses the external communication control section 301 to transmit the data for center encrypted by the second encryption key to the vehicle information center 200 connected to the external communication line network 400. Note that, in this case, the decoded data for terminal may be transmitted to the vehicle information center 200 in addition to the data for center encrypted by the second encryption key.

Here, the data for center is transmitted (output) to the external communication line network 400 in the state of being encrypted by the second encryption key. Therefore, for example, even when an illegal application is installed on the portable information terminal 300 and if the data for center in an encrypted state is transmitted to another center (site) that is unintended, it is difficult to decode the data for center encrypted by the second encryption key in the another center (site), and it is impossible to analyze and use the data for center with ease.

In the vehicle information center 200, the server 210 uses the communication control unit 211 to receive the data for center encrypted by using the second encryption key and transmitted from the portable information terminal 300. Then, the vehicle information server 212 that forms the server 210 uses the second encryption key provided in advance to decode the data for center, and stores, for example, the device actuation information, the trip information, the battery information, and the diagnostic information (failure information) in the vehicle information storage unit 214 for each user in a searchable manner.

As can be understood from the above description, according to the second embodiment, the data for terminal is encrypted by the first encryption key, while the data for center is at least encrypted by the second encryption key different from the first encryption key, and the data for terminal and the data for center can be encrypted in different encrypted states. Accordingly, the portable information terminal 300 can use the data for terminal decoded by using the first encryption key, and can also transmit the data for center encrypted by using the second encryption key to the vehicle information center 200 as it is.

Accordingly, for example, even when an illegal application is installed on the portable information terminal 300 and if the data for center is illegally transmitted to another center, it is possible to effectively prevent the transmitted data for center from being decrypted and used. That is, by encrypting the data for terminal and the data for center in the different encrypted states, the less secret data for terminal to be used by the portable information terminal 300 and the more secret data for center to be used only by the vehicle information center 200 can each be protected appropriately for communications thereof.

### c. Third embodiment

The above-mentioned first embodiment and the above-mentioned second embodiment are carried out so that, because the CAN communication line 120 of the vehicle 100 is not provided with a communication apparatus directly connected to the external communication line network 400, the information transfer ECU 110a transfers the various kinds of information to the connected portable information terminal 300 through the short-range radio communications using Bluetooth (trademark) or the like, and the portable information terminal 300 transmits the transferred various kinds of information to the vehicle information center 200.

Incidentally, depending on the vehicle 100, as indicated by the dotted line in FIG. 1, a data communication module 160 (hereinafter referred to as "DCM 160") connected to the external communication line network 400, for communicating to/from the vehicle information center 200, may be connected to the CAN communication line 120 in addition to the short-range communication control unit 150 described above in the first and second embodiments. The DCM 160 includes an external communication control section 161 for communicating data to/from the server 210 of the vehicle information center 200 through the external communication line network 400, a main control section 162 for communicating data to/from the vehicle ECUs 110 through the CAN communication line 120 to acquire control information and output an instruction to the vehicle ECUs 110, and a GPS unit 163 for detecting the current location coordinates of the own vehicle based on a radio wave received from the GPS satellite. The DCM 160 includes a microcomputer as a main component, and further includes a memory, a communication circuit, and an input/output interface.

Then, in a case where the DCM 160 as described above is provided to the vehicle 100, as in the case where the portable information terminal 300 is used in the above-mentioned first and second embodiments, the DCM 160 can transmit the various kinds of information (for example, the constant-basis vehicle information and the accumulated-basis vehicle information including the trip information according to the above-mentioned first and second embodiments) relating to the vehicle 100 to the server 210 of the vehicle information center 200 along with the vehicle ID (information corresponding to registration number or vehicle identification number), while the server 210 can transmit the information necessary for the user of the vehicle 100 to the portable information terminal 300. Further, when the user transmits operation instruction information relating to an operation of the vehicle 100 from the portable information terminal 300 to the server 210 of the vehicle information center 200, the server 210 can remotely operate the vehicle 100 by transmitting the operation instruction information to the DCM 160.

One of functions realized by such a remote operation is timer charging. The timer charging means to charge a battery mounted to the vehicle 100 in accordance with an instructed time. In this embodiment, the user of the vehicle 100 operates the portable information terminal 300 to instruct a charging ECU 110b for controlling the charging of the battery of the vehicle 100, as indicated by the dotted line in FIG. 1, to start and end the charging by using a timer. Further, in order to grasp a charging controlled state while the timer charging is being performed, a function of displaying the charging controlled state on a display screen of the portable information terminal 300 is also provided.

Incidentally, in the case where the user of the vehicle 100 uses the portable information terminal 300 to set the timer charging, for example, in a situation in which the user is away from the vehicle 100, it is highly possible that the portable information terminal 300 is being incapable of the short-range radio communications, and hence, as described above, it is extremely effective to transmit the operation instruction information on the timer charging from the portable information terminal 300 to the DCM 160 through the server 210 of the vehicle information center 200. However, for example, when the user of the vehicle 100 uses the portable information terminal 300 to set the timer charging at a time of getting off, the portable information terminal 300 is being capable of the short-range radio communications, and can directly transmit the operation instruction information to the charging ECU 110b through the CAN communication line 120. That is, when the portable information terminal 300 is being capable of the short-range radio communications, the transmission of the operation instruction information on the timer charging from the portable information terminal 300 to the DCM 160 through the server 210 of the vehicle information center 200 requires much time until the setting of the timer charging is completed.

Accordingly, in this the third embodiment, when the short-range communication control unit 150 connected to the CAN communication line 120 determines that the short-range radio communications using Bluetooth (trademark) or the like have been currently established to/from the portable information terminal 300, the short-range communication control unit 150 acquires the operation instruction information on the timer charging directly from the main control section 305 of the portable information terminal 300 to/from which the short-range radio communications have been established, and supplies the operation instruction information directly to the charging ECU 110b connected to the CAN communication line 120. Therefore, the operation instruction information can be supplied directly to the charging ECU 110b without the intermediation of the vehicle information center 200 and the DCM 160, and hence it is possible to complete the setting of the timer charging in an extremely short period of time. Note that, in this manner, even when the operation instruction information is supplied directly to the charging ECU 110b, notification information indicating that the operation instruction information has been supplied is transmitted from the portable information terminal 300 or the DCM 160 to the vehicle information center 200 so as to grasp the charging controlled state.

Note that, even in a situation in which the user is riding on the vehicle 100 along with the portable information terminal 300, for example, depending on a use status of the SPP, the short-range radio communications using Bluetooth (trademark) or the like may be temporarily unable to be established. In this case, when the user is to set the timer charging by using the portable information terminal 300, because the short-range radio communications are temporarily unable to be established, the short-range communication control unit 150 requests the main control section 305 of the portable information terminal 300 to transmit the operation instruction information to the server 210 of the vehicle information center 200 by using the external communication line network 400, and also requests the main control section 162 of the DCM 160 to perform communications by using the external communication control section 161. Therefore, the operation instruction information for setting the timer charging is supplied to the DCM 160 from the portable information terminal 300 through the vehicle information center 200, and supplied indirectly to the charging ECU 110b connected to the CAN communication line 120.

On the other hand, as described above, while the operation instruction information for setting the timer charging is being transmitted from the portable information terminal 300 to the DCM 160 through the vehicle information center 200, for example, the SPP may be opened to establish the short-range radio communications using Bluetooth (trademark) or the like. In this case, the short-range communication control unit 150 directly acquires the operation instruction information on the timer charging from the main control section 305 of the portable information terminal 300 to/from which the short-range radio communications have been established, and supplies the operation instruction information directly to the charging ECU 110b connected to the CAN communication line 120.

In this case, the charging ECU 110b acquires the directly-supplied operation instruction information and the indirectly-supplied operation instruction information, that is, the operation instruction information having the same contents with a time lag. Therefore, the portable information terminal 300 supplies the operation instruction information by adding thereto, for example, time information indicating a time at which the information is transmitted. Therefore, the charging ECU 110b previously stores the time information acquired along with the operation instruction information, and when acquiring the operation instruction information having the same contents, executes the timer charging based on the operation instruction information only if the time information is updated (that is, if a time indicated by the time information is new). Therefore, as described above, the timer charging can be executed appropriately even in a situation in which the operation instruction information having a time lag is supplied directly or indirectly.

As can be understood from the above description, according to the third embodiment, in the case where the short-range radio communications using Bluetooth (trademark) or the like have been established, the short-range communication control unit 150 can acquire the operation instruction information on the timer charging directly from the main control section 305 of the portable information terminal 300 to/from the short-range radio communications have been established, and can supply the operation instruction information directly to the charging ECU 110b connected to the CAN communication line 120. Accordingly, the control can be executed earlier than in the situation in which the operation instruction information is temporarily transmitted from the portable information terminal 300 to the vehicle information center 200 through the external communication line network 400 and the operation instruction information transmitted from the vehicle information center 200 is supplied to the charging ECU 110b through the external communication line network 400 and the DCM 160, in other words, the situation in which the operation instruction information is indirectly supplied.

Further, by adding the time information to the operation instruction information, for example, even in the situation in which two pieces of operation instruction information are supplied to the charging ECU 110b directly and indirectly, respectively, the control can be executed based on any one of the pieces of operation instruction information. Accordingly, necessary control can be executed positively.

In order to carry out the present invention, the present invention is not limited to each of the above-mentioned embodiments, different kinds of changes can be made without departing from an object of the present invention.

For example, the above-mentioned embodiments are each carried out by using, as the trip information, the information obtained until the operation position of the ignition switch is operated from the accessory-on operation position to the accessory-off operation position. In this case, it should be understood that the above-mentioned embodiments may be each carried out by using information obtained during a period after the ignition switch is turned on until being turned off.

## Claims

1. A vehicle communication apparatus for communicating to/from an external portion through a communication terminal independent of a vehicle by performing short-range radio communications to/from the communication terminal by using short-range radio communication means, the vehicle communication apparatus comprising:
vehicle information storage means for storing vehicle information acquired in accordance with travel of the vehicle in order in an updatable manner; and
information transfer means for transferring the vehicle information stored in the vehicle information storage means in order in the updatable manner to the communication terminal, wherein:
the communication terminal stores information for identifying the vehicle information whose transmission to the external portion has been completed through communications to/from the external portion among the vehicle information transferred by the information transfer means; and
the information transfer means transfers, when transferring the vehicle information from a next time on, the vehicle information stored in the vehicle information storage means next to the vehicle information whose transmission to the external portion has been completed and thereafter to the communication terminal based on the information for identifying the vehicle information whose transmission to the external portion has been completed which is stored by the communication terminal.

2. A vehicle communication apparatus according to claim 1, wherein the vehicle information storage means erases the vehicle information stored before the vehicle information whose transmission to the external portion has been completed based on the information for identifying the vehicle information whose transmission to the external portion has been completed which is stored by the communication terminal.

3. A vehicle communication apparatus according to claim 1 or 2, wherein, when there exists another short-range radio communication means for performing short-range radio communications to/from the vehicle, the short-range radio communication means for performing the short-range radio communications between the vehicle and the communication terminal establishes the short-range radio communications between the vehicle and the communication terminal after lapse of a predetermined time period after the vehicle information is stored in the vehicle information storage means.

4. A vehicle communication apparatus for communicating to/from an external portion through a communication terminal independent of a vehicle by performing short-range radio communications to/from the communication terminal by using short-range radio communication means, the vehicle communication apparatus comprising:
vehicle information storage means for storing vehicle information acquired in accordance with travel of the vehicle in order in an updatable manner;
vehicle information discrimination means for discriminating the vehicle information stored in the vehicle information storage means between the vehicle information to be used by the external portion and the vehicle information to be used by the communication terminal;
encryption processing means for encrypting respective pieces of vehicle information obtained by the vehicle information discrimination means through discrimination in different encrypted states; and
information transfer means for transferring the respective pieces of vehicle information encrypted by the encryption processing means in the different encrypted states to the communication terminal,
wherein the communication terminal decodes only the vehicle information to be used by the communication terminal of the respective pieces of vehicle information encrypted in the different encrypted states and transferred by the information transfer means, and transmits the vehicle information to be used by the external portion as it is in the encrypted state.

5. A vehicle communication apparatus according to claim 4, wherein the encryption processing means is configured to:
encrypt the vehicle information to be used by the communication terminal by using a first encryption key; and
encrypt the vehicle information to be used by the external portion by using a second encryption key different from the first encryption key.

6. A vehicle communication apparatus according to claim 5, wherein the first encryption key used by the communication terminal in order to decode the vehicle information encrypted by using the first encryption key is transmitted from the external portion.

7. A vehicle communication apparatus according to claim 5, wherein the first encryption key used by the communication terminal in order to decode the vehicle information encrypted by using the first encryption key is comprised in an application provided by the external portion and used by the communication terminal.

8. A vehicle communication apparatus for communicating to/from an external portion through a communication terminal independent of a vehicle by performing short-range radio communications to/from the communication terminal by using short-range radio communication means,
the vehicle comprising:
a dedicated communication terminal mounted to the vehicle, for communicating to/from the external portion and the communication terminal through the external portion; and
vehicle control means for acquiring instruction information for controlling the vehicle from at least one of the communication terminal and the dedicated communication terminal, and controlling the vehicle in accordance with the instruction information,
the vehicle communication apparatus comprising:
vehicle information storage means for storing vehicle information acquired in accordance with travel of the vehicle in order in an updatable manner;
information transfer means for transferring the vehicle information stored in the vehicle information storage means in order in the updatable manner to the communication terminal and the dedicated communication terminal;
direct communication means for allowing the vehicle and the communication terminal to directly communicate to/from each other through the short-range radio communications established by the short-range radio communication means; and
indirect communication means for allowing the vehicle and the communication terminal to indirectly communicate to/from each other through the external portion by using the dedicated communication terminal,
wherein the vehicle control means acquires the instruction information from the direct communication means more preferentially than from the indirect communication means when the vehicle and the communication terminal are allowed to perform the short-range radio communications to/from each other by the short-range radio communication means.

9. A vehicle communication apparatus according to claim 8, wherein:
the communication terminal transmits the instruction information by adding time information thereto when transmitting the instruction information to the vehicle by at least one of the direct communication means and the indirect communication means; and
the vehicle control means controls the vehicle in accordance with the instruction information that is new in terms of a time indicated by the time information based on the time information received along with the instruction information.

10. A vehicle communication apparatus according to claim 8 or 9, wherein:
the vehicle comprises a battery that is rechargeable by an external charger; and
the vehicle control means controls charging of the battery in accordance with the instruction information.
